# EUROPEAN PATENT SPECIFICATION

(11) **EP 0 501 437 B1**
(45) Date of publication and mention of the grant of the patent: **08.11.1995**
(21) Application number: 92103246.2
(22) Date of filing: 26.02.1992
(51) Int. Cl.: H02P 7/00

(54) **Parameter setting apparatus for motor control unit**
Vorrichtung zum Festlegen von Parametern für eine Motorregeleinheit
Appareil d'établissement de paramètres pour unité de commande de moteur

(30) Priority: 27.02.1991 JP 32823/91
(43) Date of publication of application: 02.09.1992
(73) Proprietor: MATSUSHITA ELECTRIC INDUSTRIAL CO., LTD., Kadoma-shi, Osaka 571 (JP)
(72) Inventor: Morimoto, Yasushi, Yawata-shi (JP); Unehara, Shunsuke, Kadoma-shi (JP); Ishimoto, Kenji, Nishinomiya-shi (JP); Matsukuma, Takashi, Kadoma-shi (JP)
(74) Representative: Patentanwälte Leinweber & Zimmermann

(56) References cited:
- STRUCTURED COMPUTER ORGANIZATION ENGLEWOOD CLIFFS, N.J. ANDREW S. TANENBAUM
- IEEE 1985 TEXTILE INDUSTRY 1985, JIM WEBB 'Microprocessor use in AC an DC drives'
- PATENT ABSTRACTS OF JAPAN vol. 12, no. 060 (E-584)23 February 1988 & JP-A- 62201081

## Description

### BACKGROUND OF THE INVENTION

### FIELD OF THE INVENTION

The invention relates to a parameter setting apparatus to select, change, or set an operation and a function of a motor control unit.

### DESCRIPTION OF THE RELATED ART

In recent years, applications of variable speed motors whose speed is variably controlled by a servo driver or an inverter are increasing and are becoming various due to the rapid development of the power electronics, micro electronics, and the like.

In association with it, many functions are required for the motor control unit and it is demanded that the user can easily select and set his necessary function among a number of various functions.

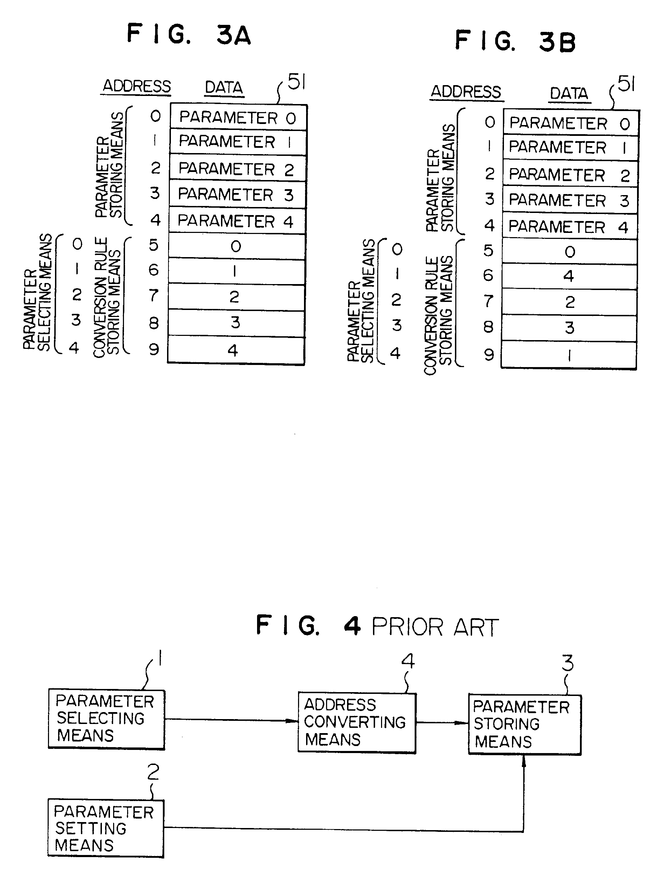

Hitherto, for those requirements, it is a general way to cope with the realization of many functions by storing parameters into a non-volatile memory or the like as shown in JP-A-62-201081. A construction for the above method will now be described hereinbelow with reference to Fig. 4.

As shown in the diagram, a parameter setting apparatus comprises parameter selecting means 1, parameter setting means 2, parameter storing means 3, and address converting means 4. The parameter selecting means 1 is constructed by rotary switches which can directly designate the kinds and number of parameters, a ten-key composed of keys "0" to "9", keys to instruct an increase and a decrease of the contents of the parameters, or the like. The parameter setting means 2 is also constructed by a ten-key, keys to instruct the increase and decrease, variable resistors to indicate the contents of the parameters in an analog manner, or the like. The parameter storing means 3 comprises a non-volatile memory such as an EEPROM (electrically erasable programable read-only memory) or the like and addresses for the necessary parameters are obtained by converting an output of the parameter selecting means 1 by the address converting means 4.

In the above construction, the address converting means 4 converts the output of the parameter selecting means 1 into the address in the parameter storing means 3 by executing calculating equations after simply multiplying by an integer or using the output as it is, for instance, or by using a conversion table, or the like.

In the above construction, however, there are problems such that a conversion rule from the output of the parameter selecting means 1 to the address of the parameter storing means 3 is fixed and when the number of parameters increases and the parameters become diversified, the number of parameters which are unnecessary for a certain application field increases, so that it is difficult to easily select and set the necessary function. Particularly, such a tendency is remarkable in the case where the parameter selecting means 1 doesn't have the ten-key and the parameters are selected by only the operation of a key to increase or decrease the parameter number or the like.

### SUMMARY OF THE INVENTION

The invention is made to solve the above problems and it is an object of the invention to provide a parameter setting apparatus for a motor control unit in which the positions of the parameters can be rearranged so that the significant parameter having a high use frequency can be easily selected in accordance with each application field.

To accomplish the above object, according to the invention, there is provided a parameter setting apparatus for a motor control unit according to Claims 1 and 2.

The parameter setting apparatus for the invention, handles the address conversion rule as one kind of parameters and the apparatus may arbitrarily connect the parameter selecting means with the address of the parameter storing means, so that the parameter having a high use frequency or the like can be rearranged to be easily selected in accordance with each application field.

### BRIEF DESCRIPTION OF THE DRAWINGS

Fig. 1 is a block diagram of a parameter setting apparatus for a motor control unit according to the first embodiment of the invention;
Fig. 2 is a block diagram of a parameter setting apparatus for a motor control unit according to the second embodiment of the invention;
Fig. 3A is a memory map in a state before rearrangement of parameters in the parameter storing means and conversion rule storing means in the embodiment of the invention;
Fig. 3B is a memory map in a state after rearrangement of the parameters in the parameter storing means and the conversion rule storing means in the embodiment of the invention; and
Fig. 4 is a block diagram of a conventional parameter setting apparatus for a motor control unit.

### DESCRIPTION OF THE PREFERRED EMBODIMENTS

Preferred embodiments of the invention will be described hereinbelow with reference to the drawings.

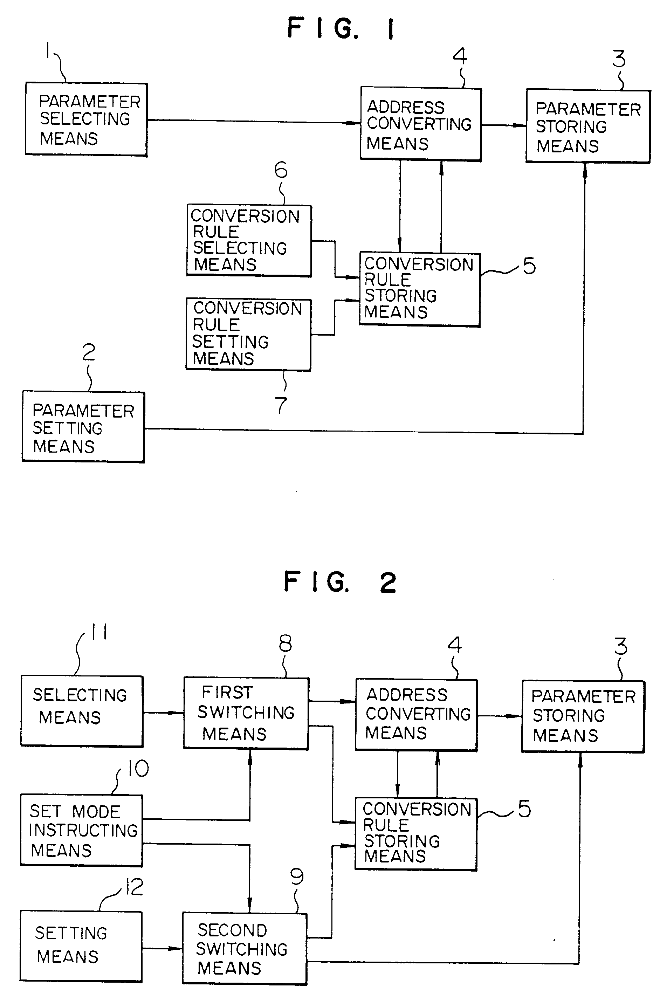

Fig. 1 is a block diagram showing a parameter setting apparatus for a motor control unit according to the first embodiment of the invention. In Fig. 1, reference numeral 1 denotes the parameter selecting means for selecting kinds and numbers of parameters to be set; 2 the parameter setting means for setting values of the selected parameters; 3 the parameter storing means for recording the set parameters; 4 the address converting means for obtaining address of storing location for the parameters; 5 conversion rule storing means for designating a method for address conversion used in the address converting means 4; 6 conversion rule selecting means for designating a specific rule from a plurality of conversion rules; and 7 conversion rule setting means for setting the content of the specific conversion rule designated by the conversion rule selecting means 6. The construction of Fig. 1 differs from the conventional construction of Fig. 4 which has been described for the related art with respect to the points that the conversion rule storing means 5 for designating a converting method in the address converting means 4 is provided and, further, the conversion rule selecting means 6 and the conversion rule setting means 7 are provided, thereby enabling the content of the conversion rule storing means 5 to be selected and set.

Figs. 3A and 3B are memory maps for explaining constructions and operations of the parameter storing means 3 and the conversion rule storing means 5 in the case where the number of parameters is set to five for easy understanding. The parameter storing means 3 and the conversion rule storing means 5 comprise one non-volatile memory 51 having addresses "0" to "9". The parameter storing means 3 is allocated to areas of addresses "0" to "4" and five parameters are stored into the respective addresses one by one. The conversion rule storing means 5 has a conversion table allocated to areas of addresses "5" to "9" and the addresses in the parameter storing means 3 are stored in those areas. Fig. 3A shows a state before the parameters are rearranged. The address converting means 4 adds an output of the parameter selecting means 1 with a bias value ("5" in the embodiment) in the conversion rule storing means 5. The resultant value is subsequently used as an address and data is read from the non-volatile memory 51 according to the address. In the above case, the parameters are not rearranged and the value of the data is equal to the value which is derived by subtracting the bias from the address, so that the value coincides with the output of the parameter selecting means 1. By accessing to the non-volatile memory 51 by using the above data as an address, consequently, the parameters can be set by the parameter setting means 2 in a manner similar to that in the related art shown in Fig. 4.

The case after the parameters are rearranged will now be described with reference to Fig. 3B. A method of rearranging the parameters will be first explained. For instance, the case of rearranging "parameter 4" in the state shown in Fig. 3A to the position of "parameter 1" will now be considered. For this purpose, address "4" of "parameter 4" is set into the area (address "6" in the non-volatile memory 51 in the embodiment) to store the address of the location storing "parameter 1" in the conversion rule storing means 5. Therefore, the area to store the address of "parameter 1" in the conversion rule storing means 5 is selected by the conversion rule selecting means 6 and the data is rewritten to "4" by the conversion rule setting means 7. If necessary, the address "9" in the non-volatile memory 51 is similarly rewritten to "1" as an address of "parameter 1" in the parameter storing means 3, thereby obtaining the state of Fig. 3B.

The operation when "parameter 4" is accessed will now be described. In a manner similar to the description in Fig. 3A, the output "1" of the parameter selecting means 1 is added with a bias value by the address converting means 4 and becomes "6". Then, the data "4" is read out from the address "6" in the non-volatile memory 51. Therefore, the value "4" is used as an address and the non-volatile memory 51 is again accessed, so that "parameter 4" can be accessed irrespective of a fact that the output of the parameter selecting means 1 is equal to "1".

According to the parameter setting apparatus for a motor control unit of the embodiment as mentioned above, the address conversion rule in the address converting means 4 can be determined by the content of the conversion rule storing means 5. The user can arbitrarily decide such a content by using the conversion rule selecting means 6 and the conversion rule setting means 7 and each user can optimally rearrange the parameters. It is, therefore, possible to provide the parameter setting apparatus for a motor control unit which can be easily used even when the number of parameters increases.

The second embodiment of the invention will now be described hereinbelow with reference to the drawings.

Fig. 2 is a block diagram showing a parameter setting apparatus for a motor control unit of the second embodiment of the invention. In Fig. 2, reference numeral 11 denotes the selecting means for selecting parameters or addresses; 12 the setting means for setting contents of the parameters or addresses; 3 the parameter storing means; 4 the address converting means; 5 the conversion rule storing means; 10 set mode instructing means for instructing either a mode to set the content of the parameter storing means 3 or a mode to set the content of the conversion rule storing means 5; 8 the first switching means for transferring the output of the selecting means 11 to either the address converting means 4 or the conversion rule storing means 5 in accordance with the set mode; and 9 the second switching means for setting a target of the setting means 12 to either the parameter storing means 3 or the conversion rule storing means 5 in accordance with the set mode. The second embodiment differs from the construction of the first embodiment described in reference to Fig. 1 with respect to the following points. That is, the conversion rule selecting means 6 and the conversion rule setting means 7 in Fig. 1 are not provided as independent means, but the first switching means 8, the second switching means 9, and the set mode instructing means 10 are provided, and the selecting means 11 and the setting means 12 are provided to be commonly used for the parameter storing means 3 and the converting rule storing means 5. When the content of the parameter storing means 3 is set, the selecting means 11 is connected to the address converting means 4 through the first switching means 8, while the setting means 12 is connected to the parameter storing means 3 through the second switching means 9. On the contrary, when the content of the conversion rule storing means 5 is set, the selecting means 11 is connected to the conversion rule storing means 5 through the first switching means 8, while the setting means 12 is connected to the conversion rule storing means 5 through the second switching means 9. Therefore, when the parameter setting device of the second embodiment rearranges the parameters, the set mode instructing means 10 instructs a mode to set the conversion rule, and the first selecting means 11 and the setting means 12 are used for setting the contents of the converting rule storing means 5.

According to the parameter setting apparatus of the second embodiment as mentioned above, the parameters can be rearranged by using the selecting means 11 and the setting means 12 without separately providing the conversion rule selecting means 6 and the conversion rule setting means 7 in Fig. 1. Consequently, it is possible to provide the parameter setting apparatus for a motor control unit which can be easily operated even when the number of parameters increases.

Although the above embodiments have been described on the assumption that the parameter storing means 3 and the conversion rule storing means 5 are constructed by one non-volatile memory, even in the case where they are constructed by independent non-volatile memories, a similar effect is also obtained by substituting the bias of the address with a chip selection. On the other hand, although the embodiments have been described on the assumption that the conversion table stores direct addresses, a similar effect is also derived even in the case that the table stores calculating equations to obtain addresses in the non-volatile memory.

As will be obviously understood from the above embodiments, according to the invention, the user decides the conversion rule storing means for determining the converting method of converting the output of the parameter selecting means into the address in the parameter storing means and can rearrange the parameters. Therefore, even when the number of parameters increases, only the parameters which are necessary for the user can be collected and accessed, and the parameter setting apparatus for a motor control unit which can be easily used can be provided.

## Claims

1. A parameter setting apparatus for setting parameters to decide operations and functions of a motor control unit, comprising:
parameter storing means (3) for storing a plurality of parameters in inner areas respectively and for providing the parameters to the motor control unit;
parameter selecting means (1) for providing a designating signal designating a specific parameter among said plurality of parameters;
address converting means (4) for receiving and converting said designating signal into an address signal addressing one of said inner areas of the parameter storing means corresponding to said specific parameter and for providing said address signal; and
parameter setting means (2) for setting and providing a content of the specific parameter to said addressed inner area designated by said address signal,
wherein said address converting means converts said designating signal into said address signal pursuant to conversion rules, and
said parameter setting apparatus further comprising:
conversion rule storing means (5), storing a plurality of conversion rules, for providing a conversion rule to said address converting means;
conversion rule selecting means (6) for selecting a specific conversion rule among said plurality of conversion rules; and
conversion rule setting means (7) for setting a content of the specific conversion rule in the conversion rule storing means.

2. A parameter setting apparatus for setting parameters to decide operations and functions of a motor control unit, comprising:
parameter storing means (3) for storing a plurality of parameters in inner areas designated by address signals respectively and for providing the parameters to the motor control unit;
address converting means (4), receiving a selecting signal to designate a specific parameter, for converting said selecting signal into an address signal addressing one of said inner areas of the parameter storing means corresponding to said specific parameter pursuant to conversion rules and for providing said address signal;
conversion rule storing means (5), storing a plurality of said conversion rules in inner areas able to be designated by said selecting signal, for providing a conversion rule to said address converting means;
selecting means (11) for providing a selecting signal;
setting means (12) for setting and providing an information for one of said inner areas of said parameter storing means and said conversion rule storing means;
set mode instructing means (10) providing a parameter set signal as a mode signal when a parameter set mode is selected and a conversion rule set signal as a mode signal when a conversion rule set mode is selected;
first switching means (8), receiving said selecting signal and said mode signal, for providing said selecting signal to said address converting means while receiving said parameter set signal as said mode signal and for providing said selecting signal to said conversion rule storing means while receiving said conversion rule set signal; and
second switching means (9), receiving said information and said mode signal, for providing said information to said address converting means while receiving said parameter set signal and for providing said information to said conversion rule storing means while receiving said conversion rule set signal.

## Patentansprüche

1. Parametereinstellvorrichtung zum Einstellen von Parametern zum Bestimmen über Operationen und Funktionen einer Motorsteuereinheit, mit:
einer Parameterspeichereinrichtung (3) zum Speichern einer Anzahl Parameter jeweils in inneren Bereichen und zum Liefern der Parameter an die Motorsteuereinheit;
einer Parameterauswahleinrichtung (1) zum Liefern eines einen bestimmten Parameter aus der Anzahl Parameter bezeichnenden Bezeichnungssignals;
einer Adressenumwandlungseinrichtung (4) zum Empfangen und Umwandeln des Bezeichnungssignals in ein Adressensignal, das einen dem bestimmten Parameter entsprechenden der inneren Bereiche der Parameterspeichereinrichtung adressiert, und zum Liefern des Adressensignals; und
einer Parametereinstelleinrichtung (2) zum Einstellen und Liefern eines Inhalts des bestimmten Parameters an den durch das Adressensignal bezeichneten adressierten inneren Bereich,
wobei die Adressenumwandlungseinrichtung das Bezeichnungssignal in das Adressensignal Umwandlungsregeln folgend umwandelt, und
die Parametereinstellvorrichtung ferner aufweist:
eine eine Anzahl Umwandlungsregeln speichernde Umwandlungsregelspeichereinrichtung (5) zum Liefern einer Umwandlungsregel an die Adressenumwandlungseinrichtung;
eine Umwandlungsregelauswahleinrichtung (6) zum Auswählen einer bestimmten Umwandlungsregel aus der Anzahl Umwandlungsregeln; und
eine Umwandlungsregeleinstelleinrichtung (7) zum Einstellen eines Inhalts der bestimmten Umwandlungsregel in der Umwandlungsregelspeichereinrichtung.

2. Parametereinstellvorrichtung zum Einstellen von Parametern zum Bestimmen von Operationen und Funktionen einer Motorsteuereinheit, mit:
einer Parameterspeichereinrichtung (3) zum Speichern einer Anzahl Parameter in durch Adressensignale jeweils bezeichneten inneren Bereichen und zum Liefern der Parameter an die Motorsteuereinheit;
einer ein Auswahlsignal zum Bezeichnen eines bestimmten Parameters empfangenden Adressenumwandlungseinrichtung (4) zum Umwandeln des Auswahlsignals in ein Adressensignal, das einen dem bestimmten Parameter entsprechenden der inneren Bereiche der Parameterspeichereinrichtung adressiert, und zwar Umwandlungsregeln folgend, und zum Liefern des Adressensignals;
einer eine Anzahl der Umwandlungsregeln in durch die Auswahlsignale bezeichenbaren inneren Bereichen speichernden Umwandlungsregelspeichereinrichtung (5) zum Liefern einer Umwandlungsregel an die Adressenumwandlungseinrichtung;
einer Auswahleinrichtung (11) zum Liefern eines Auswahlsignals;
einer Einstelleinrichtung (12) zum Einstellen und Liefern einer Information für einen der inneren Bereiche der Parameterspeichereinrichtung und der Umwandlungsregelspeichereinrichtung;
einer Einstellmodusvorgabeeinheit (10), die wenn ein Parametereinstellmodus ausgewählt ist, ein Parametereinstellsignal als Modussignal und wenn ein Umwandlungsregeleinstellmodus ausgewählt ist ein Umwandlungsregeleinstellsignal als Modussignal liefert;
einer das Auswahlsignal und das Modussignal empfangenden ersten Umschalteinrichtung (8) zum Liefern des Auswahlsignals an die Adressenumwandlungseinrichtung beim Empfangen des Parametereinstellsignals als das Modussignal und zum Liefern des Ausgangssignals an die Umwandlungsregelspeichereinrichtung beim Empfangen des Umwandlungsregeleinstellsignals; und
einer die Information und das Modussignal empfangenden zweiten Umschalteinrichtung (9) zum Liefern der Information an die Adressenumwandlungseinrichtung beim Empfangen des Parametereinstellsignals und zum Liefern der Information an die Umwandlungsregelspeichereinrichtung beim Empfangen des Umwandlungsregeleinstellsignals.

## Revendications

1. Appareil d'établissement de paramètres pour établir des paramètres permettant de décider des opérations et des fonctions d'une unité de commande de moteur, comportant :
des moyens de mémorisation de paramètres (3) pour mémoriser plusieurs paramètres dans des zones internes, respectivement, et pour envoyer les paramètres vers l'unité de commande de moteur,
des moyens de sélection de paramètres (1) pour fournir un signal de désignation désignant un paramètre spécifique parmi lesdits plusieurs paramètres,
des moyens de conversion en adresses (4) pour recevoir et convertir ledit signal de désignation en un signal d'adresse indiquant l'adresse de l'une desdites zones internes des moyens de mémorisation de paramètres qui correspond audit paramètre spécifique et pour délivrer ledit signal d'adresse, et
des moyens d'établissement de paramètres (2) pour établir le contenu du paramètre spécifique et l'envoyer vers ladite zone interne adressée indiquée par ledit signal d'adresse,
dans lequel lesdits moyens de conversion en adresses convertissent ledit signal de désignation sous la forme dudit signal d'adresse conformément à des règles de conversion, et
ledit appareil d'établissement de paramètres comportant en outre :
des moyens de mémorisation de règles de conversion (5), mémorisant plusieurs règles de conversion, pour fournir une règle de conversion auxdits moyens de conversion en adresses,
des moyens de sélection de règle de conversion (6) pour sélectionner une règle de conversion spécifique parmi lesdites plusieurs règles de conversion, et
des moyens d'établissement de règle de conversion (7) pour établir le contenu de la règle de conversion spécifique dans les moyens de mémorisation de règles de conversion.

2. Appareil d'établissement de paramètres pour établir des paramètres permettant de décider des opérations et des fonctions d'une unité de commande de moteur, comportant :
des moyens de mémorisation de paramètres (3) pour mémoriser plusieurs paramètres dans des zones internes désignées par des signaux d'adresses respectivement et pour envoyer les paramètres vers l'unité de commande de moteur,
des moyens de conversion en adresses (4), recevant un signal de sélection pour désigner un paramètre spécifique, de manière à convertir ledit signal de sélection en un signal d'adresse indiquant l'adresse de l'une desdites zones internes des moyens de mémorisation de paramètres qui correspond audit paramètre spécifique conformément à des règles de conversion, et pour délivrer ledit signal d'adresse,
des moyens de mémorisation de règles de conversion (5), mémorisant plusieurs desdites règles de conversion dans des zones internes qui seront désignées par ledit signal de sélection, de manière à fournir une règle de conversion auxdits moyens de conversion en adresses,
des moyens de sélection (11) pour fournir un signal de sélection,
des moyens d'établissement (12) pour établir et fournir des informations relatives à l'une desdites zones internes desdits moyens de mémorisation de paramètres et desdits moyens de mémorisation de règles de conversion,
des moyens d'indication de mode d'établissement (10) fournissant un signal d'établissement de paramètres en tant que signal de mode lorsqu'un mode d'établissement de paramètres est sélectionné et un signal d'établissement de règle de conversion en tant que signal de mode lorsqu'un mode d'établissement de règle de conversion est sélectionné,
des premiers moyens de commutation (8), recevant ledit signal de sélection et ledit signal de mode, pour envoyer ledit signal de sélection vers lesdits moyens de conversion en adresses lorsque ceux-ci reçoivent ledit signal d'établissement de paramètres en tant que dit signal de mode et pour envoyer ledit signal de sélection vers lesdits moyens de mémorisation de règles de conversion lorsque ceux-ci reçoivent ledit signal d'établissement de règle de conversion, et
des seconds moyens de commutation (9), recevant lesdites informations et ledit signal de mode, pour envoyer lesdites informations vers lesdits moyens de conversion en adresses lorsque ceux-ci reçoivent ledit signal d'établissement de paramètres, et pour envoyer lesdites informations vers lesdits moyens de mémorisation de règles de conversion lorsque ceux-ci reçoivent ledit signal d'établissement de règle de conversion.
